# EUROPEAN PATENT APPLICATION

(11) **EP 1 280 295 A1**
(43) Date of publication of application: **29.01.2003**
(21) Application number: 01850128.8
(22) Date of filing: 25.07.2001
(51) Int. Cl.: H04L 9/00

(54) **A method of enabling secure transfer of a package of information**

(71) Applicant: IES Internet Express Scandinavia AB, 164 93 Kista (SE)
(72) Inventor: Ekström, Göran, 723 51 Västeraas (SE)
(74) Representative: Ellner, Lars O.

(57) **Abstract**

The present invention relates to a method of enabling secure transfer of a package of information in a digital communications network from a sender to a receiver. According to the method a package of information is encrypted and provided to the receiver. A third party is provided with an encryption key having such a format that it is unable to decrypt said package of information. The encryption key is, upon positive identification of the receiver, providable from said third party to the receiver, and enables, with the involvement of a supplementary encryption key of the receiver, decryption of the package of information.

## Description

### Technical field of the invention

The present invention relates to a method and a system for enabling secure transfer of a package of information in a digital communications network from a sender to a receiver.

### Background of the invention

The Internet has revolutionized the way business is done and has changed consumer behaviour in a very short space of time. However, the e-Economy will only be able to realise its full potential if a number of important conditions are met. One of these conditions will be the underlying security of the data transported over the Internet, intranets and extranets.

Thus, there is an increasing demand for creating secure transfer of packages of information between senders and receivers in digital communications networks. In areas such as digital business communication, digital money transactions, digital product delivery, etc., it is of great importance that the package of information does not fall into the wrong hands or is tampered with.

It has previously been proposed to use an intermediate storage, of the exchanged information, on a so called secure or trusted server, having controlled access. Even though there is controlled access to the server, in order to make sure that the package of information is provided to the correct receiver, the security is not satisfactory enough. For instance, an operator of the so called secure server may maliciously access secret information that is stored on the server. Thus, this solution can not guarantee satisfactory security and can therefore not be considered a trusted server. Some other drawbacks of the above solution is that large volumes of information must be stored on the server and that the server must provide extreme communication bandwidth.

An alternative is to send a package of information directly to the receiver, the package of information being encrypted with the receiver's public key by means of PKI (Public Key Infrastructure). However, this method greatly limits the information exchange to e-mail and gives the sender little control over the sent information, which e.g. cannot be revoked by the sender.

### Summary of the invention

An object of the present invention is to achieve a method, a system and a computer readable medium that alleviate the drawbacks of the prior art.

Another object of the present invention is to achieve a method, a system and a computer readable medium that allow a sender to control a consignment.

Yet another object of the present invention is to achieve a simple and effective, yet secure method, system and computer readable medium for information handling.

These and other objects, which will become apparent in the following, are solved by a method, a system and a computer readable medium as claimed in the appended claims.

The invention is based on the insight that secure and controlled transfer of a package of information is achieved by encrypting said package of information and depositing to a third party only a part of the data necessary for decrypting the package of information. The security level is hereby increased, since an operator with malice aforethought does not have access to all necessary data for decryption and will therefore not be able to e.g. read or alter the information.

Basically, this is accomplished by transferring an encryption key to a third party, while the receiver will have or be provided with supplementary encryption key, both keys being necessary for decrypting the package of information.

This means that the third party cannot decrypt the package of information without the receiver. Thus, the third party is indeed a trusted third party. Conversely, this also means that the receiver cannot reveal the contents of the encrypted package of information without the involvement of the trusted third party, thus, giving the sender possibility to control or monitor the activities of the receiver, e.g. by instructing the third party under what conditions the receiver may be given the deposited encryption key.

There are two similar alternative embodiments of the invention, which both come from the same inventive concept of ensuring that an encrypted package of information is decryptable only when the supplementary encryption key of the receiver is combined with the encryption key deposited at the trusted third party. The term "combined" or "in combination" should be interpreted as "involving" both encryption keys. As will be apparent from the following, the encryption keys may be "combined" in different ways.

One of the alternatives is to encrypt the package of information and provide at least one encryption key, i.e. a first encryption key, to the receiver and at least one encryption key, i.e. a second encryption key, to the third party, the package of information having been encrypted with e.g. a newly generated encryption key by combining all said keys. All keys are necessary for decrypting the package of information. Thus, the receiver and the trusted third party cannot do it independently of each other.

Another alternative is to encrypt the package of information with an encryption key and encrypt the encryption key so that only the receiver may be able to decrypt it, e.g. encryption by means of a public key of the receiver. Thereafter, the encrypted encryption key is transferred to the third party. Only the receiver is in possession of the key, e.g. his own private key, for decrypting the encryption key and thereafter being able to decrypt the actual package of information.

When a package of information is being transferred in accordance with the present invention, three participants or parties are involved, namely the sender, the receiver and the trusted third party.

Thus, from the sender's point of view, according to one aspect of the invention a method of enabling secure transfer of a package of information in a digital communications network from a sender to a receiver is provided. In this method the package of information is encrypted and the encrypted package of information is provided to the receiver. Then an encryption key is provided to the third party, the encryption key having such a format that it is unable to decrypt said package of information. Thus, this may be one of two encryption keys used to encrypt the package of information (a first key being provided to the receiver and a second key to the third party) or an encrypted encryption key (e.g. encrypted with a public key of the receiver). In either case, the third party has one encryption key and the receiver has a supplementary encryption key. The encryption key now held by the third party is providable from the third party to the receiver, upon positive identification of the receiver. This encryption key enables, with the involvement of the supplementary encryption key of the receiver, decryption of the package of information.

From the receiver's point of view, according to a second aspect of the invention a method of enabling secure transfer of a package of information in a digital communications network from a sender to a receiver is provided. In this method a package of information, which is encrypted, is obtained from a sender. After having been positively identified by the third party, an encryption key is obtained from the third party. The encrypted package of information is decrypted by means of that obtained encryption key with the involvement of a supplementary encryption key of the receiver. This may be realised in different ways. For example, a first encryption key is obtained from the sender. After having been positively identified by the third party, a second encryption key is obtained from said third party. The third party has previously received the second encryption key from the sender. The first and the second encryption keys combined enables decryption of the package of information. Another example is instead of obtaining a first encryption key from the sender, the receiver may already have an encryption key, such as a private encryption key, and obtain an encrypted "second" encryption key from the third party, said "second" encryption key e.g. being encrypted with the receiver's public key. The result is the same in both cases and they relate to the same inventive concept. Thus, the receiver and the third party cannot separately decrypt the encrypted package of information.

From the third party's point of view, according to a third aspect of the invention a method of enabling secure transfer of a package of information in a digital communications network from a sender to a receiver is provided. In this method an encryption key is received from a sender of an encrypted package of information, the encryption key, with the involvement of a supplementary encryption key, enabling decryption of said package of information. The received encryption key may be one of two encryption keys, the other one being the supplementary key provided to the receiver. Alternatively, the received encryption key may be encrypted, such as with the receiver's public key, wherein the supplementary encryption key would e.g. be the receiver's private key. The receiver of the package of information is identified and the third party's encryption key, having such a format that it is unable to decrypt said package of information, is provided to the receiver upon positive identification of the same.

The invention thus provides a secure transfer of an encrypted package of information, in that it can only be decrypted by combining the keys of two different parties, namely the receiver and the third party. An operator of the third party cannot eavesdrop on a consignment, as possession of both keys is required. A consignment is metaphorically speaking a safe container that can be used for exchanging packages of information over insecure communication channels. Thus, another important advantage of the present invention is that information may be securely transferred on an otherwise insecure channel and the invention is virtually independent of the communication method.

Furthermore, since the receiver must acquire an encryption key from the trusted third party to recover the exchanged information, this gives the sender control and supervision possibilities. The sender may give instructions to the third party under what conditions the receiver may be provided with the encryption key that has been provided to the third party. These conditions or control attributes may be time related. For instance, the receiver must identify himself to the third party no later than one hour after being notified of the package of information. Another control attribute may be that the receiver must digitally sign a receipt providing proof of the delivery to the sender. When it comes to important contracts or agreements, there may be a control attribute with a co-signing function that requires mutual signing of the agreements. Other control attributes are also conceivable. Furthermore, if the receiver has not yet obtained the encryption key from the third party, the sender may, by giving specific instructions to the third party, prevent the receiver from obtaining that encryption key. Thus, the sender has revoked the receiver's rights to that encryption key.

Furthermore, there is a possibility to use a control attribute which facilitates notification. For instance, an e-mail or SMS may be provided to the sender of a consignment in order to make the sender immediately aware of recipient activities.

According to one embodiment of the invention PKI (Public Key Infrastructure) is used, wherein the package of information is encrypted with an encryption key, and before being provided to the third party, that encryption key is encrypted with a public key of the receiver. Thus, the third party will have an encrypted encryption key which cannot be decrypted without a private key of the receiver, said private key only being known to the receiver.

However, PKI may also be used in the case when the sender provides the receiver with a first encryption key and the third party with a second encryption key, both keys being needed to decrypt an encrypted package of information. So in order to further enhance the security, the first encryption key is masked by encrypting it with a public key of the receiver. The receiver will thus obtain two objects, namely an encrypted package of information and the encrypted first encryption key. The receiver will easily decrypt the encrypted encryption key by means of his own private key. However, having now obtained the first encryption key in readable form, is not enough for decrypting the encrypted package of information. He still needs the second encryption key, which has been provided to the third party. As been described previously, the receiver must be identified before he may obtain the second encryption key. Furthermore, in this manner, even in the unlikely case of a dishonest operator of the third party somehow getting hold of the first encryption key, it will be in an encrypted form, which can only be decrypted with the receiver's private key. Naturally, also the second encryption key may be encrypted with the receivers public key, without changing the requirements of the necessity of a positive identification of the receiver for obtaining the second encryption key from the third party.

The package of information to be transferred from a sender to a receiver may be encrypted in different manners. For instance, a first encryption key and a second encryption key may be combined so as to generate a new combined encryption key, with which the package of information is encrypted. Then, as previously described the first and second encryption keys, being independent, are provided to the receiver and the third party, respectively. Both keys are required to recover the information.

An alternative way to encrypt said package of information is to first encrypt the package of information with a first encryption key, and then further encrypt the encrypted package of information with the second encryption key. The first and second encryption keys are then, just like above, provided to the receiver and the third party, respectively.

Yet another alternative is to use a main encryption key for encrypting the package of information, and then divide that encryption keys into first and second encryption keys (e.g. containing 50 % each of the total number of bits), which are provided to the receiver and the third party, respectively. Instead of dividing the main encryption key, it may be encrypted with a public key of the receiver and the provided in encrypted form to the third party, as has been previously discussed.

The receiver may be identified in any suitable manner, e.g. by means of a user name and a corresponding password, or by PGP, etc. In one embodiment of the invention the receiver is identified by means of a registered certificate. The third party keeps up with the certificate of the receiver, while the sender may be completely ignorant thereof. The receiver will, thus, identify himself by means of the certificate and specify a serial number that corresponds to the actual consignment that contains the package of information. The third party will check if the receiver is allowed to open the consignment and, if so, provide him with the deposited encryption key.

According to another embodiment of the invention the secure transfer of said package of information is only completely performed if the sender has been identified by the third party. Also this identification is preferably performed by means of a registered certificate.

The use of certificates strengthens identification of the communicating parties, which in turn increases trust and legal strength. The trusted third party is able to store different types of already existing, registered certificates and will be updated on their validity. The use of verification of user certificates against revocation lists gives real-time validation that secures that the involved certificates have not been compromised. The third party also has the option of accepting which certificates may be used for communication with each other. Registering all users' preferred certificates with the trusted third party simplifies the use of a PKI.

An extra certificate may be used for communication with the trusted third party for increasing the security when soft certificates, i.e. certificates that are stored on the file system of a computer, are used.

Even though the actual encrypted package of information is not stored at the third party, a hash value derived from the contents of said package of information may be stored by the third party. This means that the receiver may be given the opportunity to detect if said package of information has been tampered with. Also, by saving a hash value the trusted third party may add transaction archiving that may be used for dispute resolution.

A log of all activities on a consignment by the trusted third party makes it possible to provide timestamp information. The trusted third party may be provided with a tick engine, which makes it possible to produce invoicing information based on transactions.

The invention may be implemented as a client-server application, wherein the third party has a server which performs all authentication and validation. Also, the encryption key that is provided to the third party is deposited on that server. The sender and receiver are preferably registered clients of the third party. The clients run a small application that implements the encryption and decryption. Thus, the clients communicate with the server that holds one of the encryption keys on behalf of the sender. Suitably, the client software cannot be used as a tool for breaking into the system or the consignments containing said package of information.

The third party has suitably a network of servers for communication with the clients. Clients are preferably implemented as desktop applications running on personal computers. The encryption keys may be generated randomly. The clients communicate with a selected server via IP over the Internet. Users identify themselves to the servers, preferably by means of certificates, such as X.509 certificates. The servers may be implemented with redundant hardware for maximum availability. The servers in the network communicate with each other to support interaction between users affiliated with different servers.

It should be clear from what has been previously discussed, that the present invention provides a flexible method and system for transferring information. It is not only limited to physical persons wishing to exchange information. Thus, the communicating parties may be applications as well as human beings. The receiver may for instance be a service provider application for buying something over the Internet.

As has been shown, the present invention has many advantages. An open infrastructure is achieved which allows different parties to communicate in a secure way. Another advantage is that the third party identifies the sender and the receiver in real time. A further advantage is that the inventive concept is independent of the information format. Yet another advantage is that the communication between registered parties may be performed at an arbitrary time. Furthermore, only a minimum software is required for a user.

Furthermore, the present invention may be implemented as a virtual safe. This is accomplished by only giving the sender access to the package of information and the supplementary key described above. In other words the sender and the receiver is one and the same person. Thus, the sender may utilise the present invention to protect sensitive information on an unsafe system. He simply encrypts the information and provides an encryption key to the third party, the sender himself holding the supplementary encryption key.

### Brief description of the drawings

Fig. 1 illustrates a server network for use in the present invention.
Fig. 2 illustrates one embodiment of the invention.
Fig. 3 illustrates in a flow chart the steps of sealing a consignment in accordance with the embodiment illustrated in Fig. 2.
Fig. 4 illustrates in a flow chart the steps of unsealing a consignment in accordance with the embodiment illustrated in Fig. 2.
Fig. 5 illustrates another embodiment of the invention.
Fig. 6 illustrates in a flow chart the steps of sealing a consignment in accordance with the embodiment illustrated in Fig. 5.
Fig. 7 illustrates in a flow chart the steps of unsealing a consignment in accordance with the embodiment illustrated in Fig. 5.
Fig. 8 schematically illustrates a physical architecture of a system for use in the present invention.

### Detailed description of the drawings

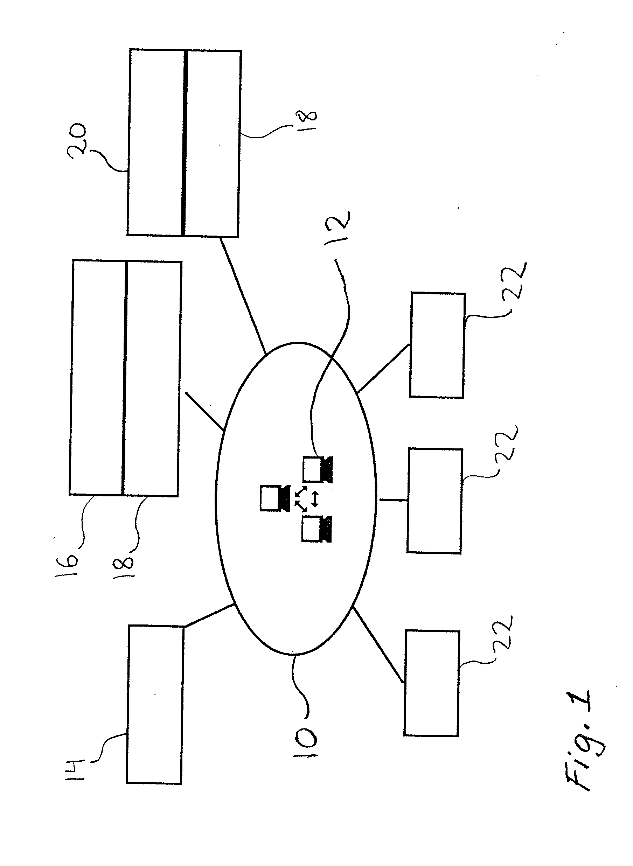

Fig. 1 illustrates a server network 10 for use in the present invention. The server network 10 comprises several servers 12. The invention provides an infrastructure for secure electronic communication. It packages information into electronic consignments and controls access to the contents. The servers 12 do not take part in the actual information transport. Consignments are to be regarded as safe containers that can be used for exchange of information over insecure communication channels. The communicating parties may be human beings as well as applications. Consignments are created and accessed by means of client software 14. Several types of clients exist, such as stand-alone desktop applications and add-ins for e-mail clients 16. All client implementations share a software library 18, also available for users who want develop their own user applications 20.

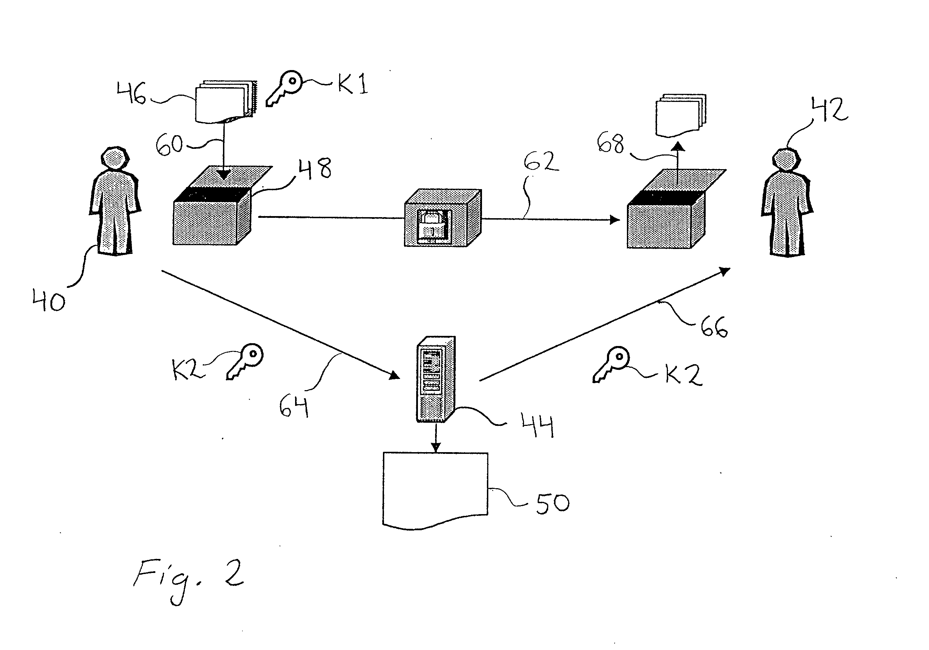

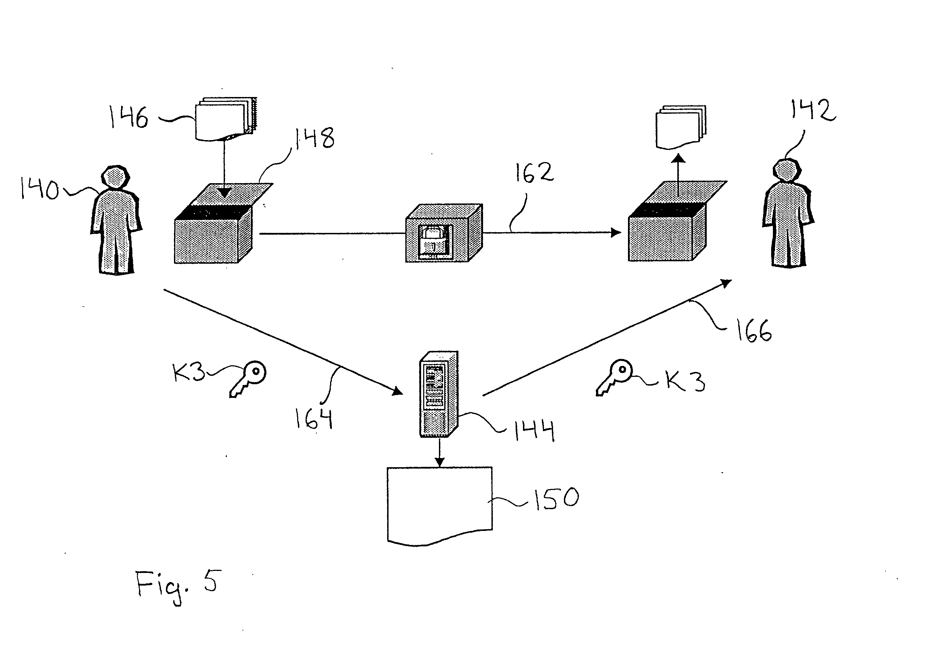

The clients 14, 16 communicate with a server 12 via the Internet. The servers 12 are interconnected in the server network 10 to facilitate communication between clients that are connected to different servers. In order to become a client, one has to become registered with a server 12. The registering process comprises storing of a certificate 22 for producing a digital signature. Different types of certificates 22 (three illustrated in the figure) may be used by different clients 14, 16. When a first user of the system wishes to transfer a package of information to other users, he activates his client identity 14 that has been registered with a server 12 and creates a consignment. The first user is only allowed to create a consignment after having sufficiently identified himself to the server 12. Thereafter, the first user names those users that shall be granted access. Files are then added to the consignment, which is finally sealed and may now be distributed to the receiving users by means of appropriate means of transport, e.g. e-mail. The users that have received the consignment must activate their respective client application in order to open the consignment. Permission to access the consignment is granted only if a receiving user can provide sufficient proof of identity and has been granted access by the creator of the consignment. If both these conditions are met a receiving user can extract the files contained in the consignment. Users identify themselves to the server network 10 by means of digital certificates 22. The actual method of handling encryption keys for sealing and opening consignments will be illustrated in connection with Figs. 2 and 5.

Fig. 2 illustrates one embodiment of the invention. The figure illustrates a sender 40 and a receiver 42 of a package of information 46. Furthermore, there is a trusted third party 44, which is illustrated with a server. The package of information 46 is sent in a consignment 48, which is illustrated as pieces of paper put into a box, as indicated by arrow 60. The consignment 48 is sealed by encryption with two randomly selected encryption keys K1, K2.

One encryption key K1 is encrypted with a public key (not shown) of the receiver 42 and is sent together with the sealed consignment 48 from the sender 40 to the receiver 42. This is indicated by an arrow 62. The receiver can decrypt the encrypted encryption key K1 by means of his private key (not shown). In Fig. 2 the sealed consignment 48, which is sent to the receiver, is illustrated with a provided lock.

The other encryption key K2 is stored on the server of the third party 44 (indicated by an arrow 64) together with consignment attributes. These attributes, set by the sender 40, define under what conditions the receiver 42 may obtain the other encryption key K2 from the third party 44. Even though the contents of the consignment 48 are not stored by the third party 44, a hash value derived from the contents is stored.

Both encryption keys K1, K2 are required to open the consignment 48. So far the receiver 42 has only obtained one encryption key K1, and must acquire the second encryption key K2 from the third party 44. This gives the third party 44 control over the receiver 42. Furthermore, an operator of the third party 44 cannot eavesdrop on a consignment, since possession of both encryption keys K1, K2 are required to open the consignment 48 and extract the package of information 46.

When the receiver 42 has been identified by the third party 44, and met the conditions defined by the sender 40, he is given the other encryption key K2, as indicated by an arrow 66. The receiver now being in possession of both encryption keys K1, K2 may open the consignment 48 and extract the package of information, as indicated by an arrow 68.

All transactions are logged by the third party in a transaction log 50, which makes it possible to provide timestamp information and to produce invoicing information based on transactions.

When the sender 40 creates a consignment, the client library performs the following processing to create a sealed consignment:
1. Compile the package of information 46 that shall be included in the consignment 48.
2. Add digital signatures for selected components.
3. Specify the identity of the receivers 42 and processing attributes.
4. Contact the server of the third party 44. Use a digital certificate as a proof of identity.
5. Retrieve the preferred public keys for all receivers 42 from the server of the third party 44.
6. Seal the consignment 48.
7. Store consignment attributes and one K2 of the encryption keys on the server of the third party 44.
8. Distribute the consignment 48 by e.g. e-mail or ftp.

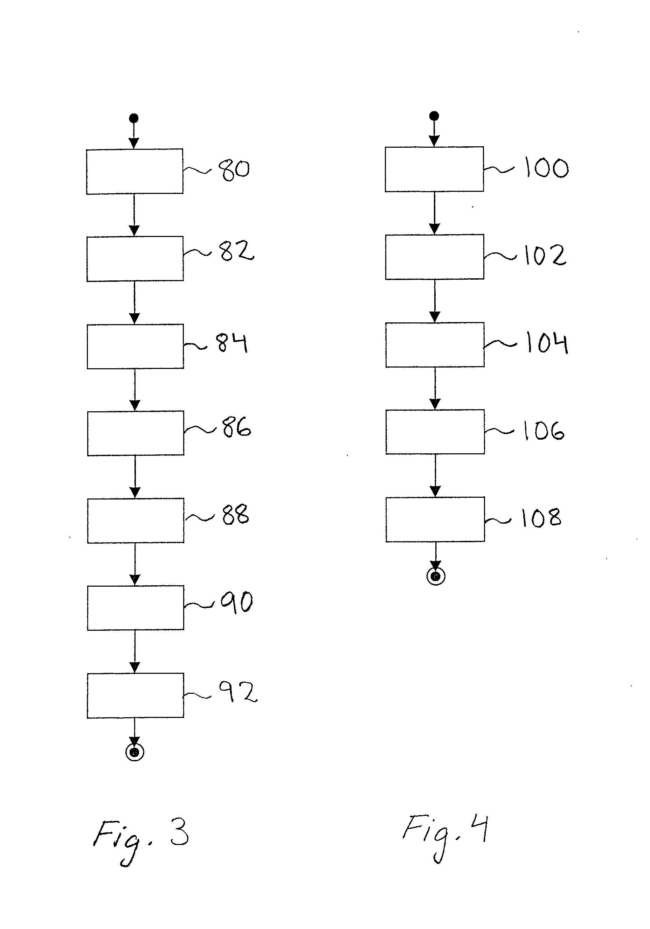

The actual sealing (step 6) of the consignment 48 is illustrated in Fig. 3.

Fig. 3 illustrates in a flow chart the steps of sealing a consignment in accordance with the embodiment illustrated in Fig. 2. In a first creating step 80, a first random encryption key K1 is created. This is followed by a second creating step 82, in which a second random encryption key K2 is created. In a compiling step 84 an encryption key K is compiled from encryption keys K1 and K2. The compiled encryption key K may be obtained by e.g. performing an XOR of encryption keys K1 and K2. In a first encryption step 86, the package of information is encrypted with the new, compiled encryption key K. In a second encryption step 88, one K1 of the original encryption keys is encrypted with a receiver's public key. If the package of information is to be sent to several receivers, the step 88 is carried out for each one of the receivers with a respective public key. In an adding step 90, the encrypted encryption key K1 is added to the consignment. In a depositing step 92, the other encryption key K2 is kept for the deposit on a server of the third party. This is preferably done via SSL. The consignment now having been sealed may be distributed to the receivers.

The person skilled in the art realises that alternative orders in which some of the steps are performed are possible. Also, other ways to combine encryption keys K1 and K2 are possible. For instance, the package of information may first be encrypted by one encryption key K1, and then by the other encryption key K2. Another alternative is to start with a random encryption key with which the package of information is encrypted, and then divide that key into two encryption keys K1, K2 for distribution to the receiver and the third party, respectively.

With reference to Fig. 2, when the receiver 42 wishes to open a consignment 48, the client library of the receiver performs the following processing to open a sealed consignment:
1. Extract the consignment identity from the consignment 48.
2. Contact the server of the third party 44.
3. Retrieve the encryption key K2 from the server of the third party 44.
4. Unseal the consignment 48.
5. Extract the contained package of information 46.

The actual unsealing (step 4) or decryption of the consignment 48 is illustrated in Fig. 4.

Fig. 4 illustrates in a flow chart the steps of unsealing a consignment in accordance with the embodiment illustrated in Fig. 2. In an extracting step 100, the encrypted encryption key K1, which was sent with the consignment, is extracted. In a subsequent first decrypting step 102, the user uses his private key to decrypt the encrypted encryption key K1. In a retrieving step 104, the encryption key K2 stored on the server of the third party is retrieved therefrom. At this point, the receiver has both encryption keys K1 and K2. However, the package of information was encrypted with a compiled encryption key K. Thus, in a compiling step 106, the compiled encryption key K is generated from K1 and K2. This is followed by a second decrypting step 108, in which the package of information is decrypted with the compiled encryption key K.

The person skilled in the art will understand that the order in which some of the steps are performed may be altered. Also, depending on how the package of information was encrypted, the use and combination of the encryption keys K1 and K2 is altered accordingly.

Fig. 5 illustrates another embodiment of the present invention. Using the reference numerals of Fig. 2 with the addition of 100, Fig. 5 illustrates a sender 140, a receiver 142, a third party 144, a package of information 146 to be sent in a consignment 148, and a transaction log 150. In this embodiment, instead of distributing two encryption keys K1, K2, only one encryption key K3 is used. The package of information 146 is encrypted with this encryption key K3, wherein the consignment 148 is sealed. The consignment 148 is sent to the receiver 142, as indicated by arrow 162. The encryption key K3 is encrypted with a public key (not shown) of the receiver 142. The encrypted encryption key K3 is deposited on the server of the third party 144, as indicated by arrow 164. Thus, the encryption key K3 is in such a format that it is unable to decrypt said package of information. The receiver 142 will, after having been positively identified by the third party 144, obtain the encrypted encryption key K3 (as indicated by arrow 166) and will with the involvement of supplementary encryption key be able to open the consignment 148. In this case the supplementary encryption key is a private key (not shown) of the receiver 142. Thus, the receiver 142 decrypts the encrypted encryption key K3 with his private key and subsequently decrypts the package of information with that encryption key K3.

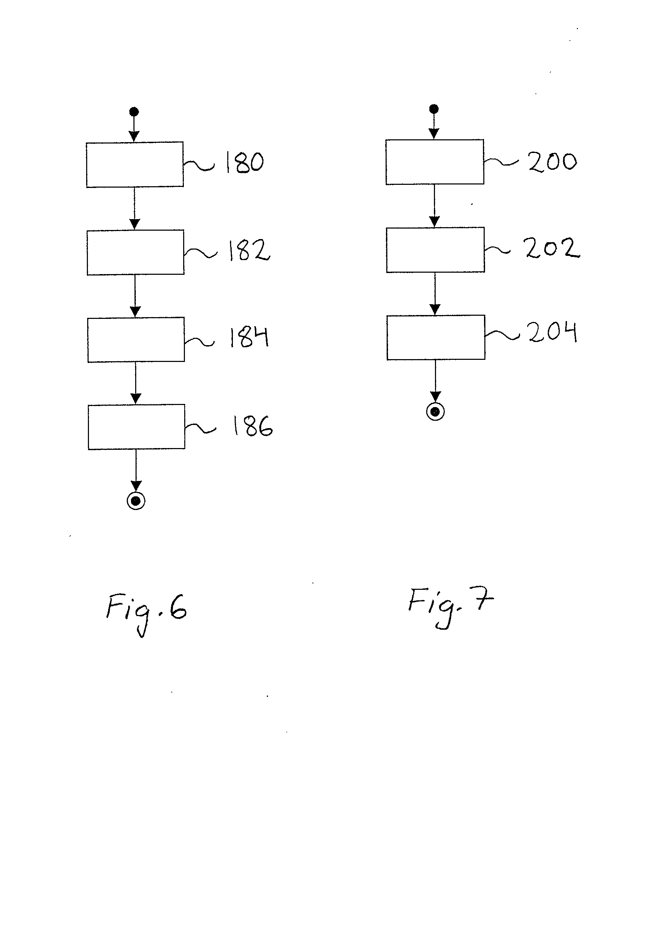

Fig. 6 illustrates in a flow chart the steps of sealing a consignment in accordance with the embodiment illustrated in Fig. 5. In a creating step 180, a random encryption key K3 is created by the application software of the sender. This encryption key K3 is used in a first encryption step 182 for encrypting the package of information to be provided to a receiver. In a second encryption step 184, the actual encryption key K3 is encrypted with a public key of the receiver. It should be noted that if the package of information is provided to several receivers, the second encryption step 184 will be performed for each one of the receivers with their respective public key. Finally, in a depositing step 186, the encrypted encryption key K3 is provided to a server of the third party. The consignment is now sealed and may be provided to the receiver.

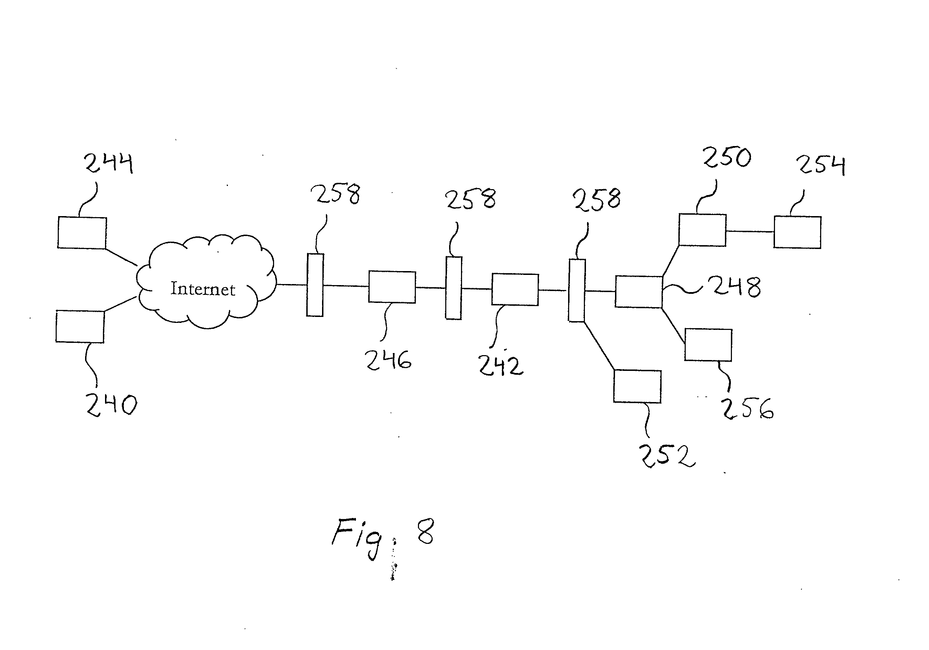

Fig. 7 illustrates in a flow chart the steps of unsealing a consignment in accordance with the embodiment illustrated in Fig. 5. In a retrieving step 200 the receiver retrieves the encrypted encryption key K3. The encryption key K3 is now in such a format that it is not possible to decrypt the package of information. Therefore, in a first decrypting step 202, the receiver uses his private key to decrypt the encrypted encryption key K3 so as to obtain it in such a format that it is possible to decrypt the package of information. So, in a second decrypting step 204, the encryption key K3 is used for decrypting the package of information, whereby the consignment has been unsealed.

Fig. 8 schematically illustrates a physical architecture of a system for use in the present invention. The figure gives merely an overview of the physical system architecture and some of its incorporated components. Redundancy and load balancing components have been omitted for the sake of clarity. The components have the following functions. A toolkit 240 is provided for development of clients and applications using the trusted servers of the third party. The toolkit 240 may, for instance, be used for adding PKI based security to legacy applications. All functionality, including administrative functions, is available thorough the toolkit 240. The toolkit 240 communicates directly with a first server 242 by means of XML over HTTPS. The first server 242 communicates with the trusted servers specific clients via library routines. A client application 244 is developed specifically for use with the trusted third party. The client application 244 provides a user-friendly graphical interface to the functionality that is offered by the toolkit 240. The client application 244 is loosely integrated with e-mail clients, via MAPI, for the transport of consignments. A second server 246 offers a graphical interface to administrative services via thin clients, for example, registering new users. A thin client has little predetermined functionality and is a client that gets part of its behaviour downloaded from the second server 246. Thus, the second server 246 communicates with general web-clients, such as web browsers of the types Internet Explorer or Netscape. The second server 246 uses the toolkit 240 to communicate with the first server 242. The first server 242 and a third server 248 realise a layered implementation of business logic. These two components are responsible for bookkeeping of consignments, signatures, timestamps and encryption keys. Another function of the first server 242 and the third server 248 is to verify user identities and certificates. A database 250 of the third server 248 has the function of storage of users, consignment information, signatures and certificates. A certificate producing component 252 produces certificates for internal use, i.e. the certificates are not used publicly. Only the third party needs to accept and rely on these certificates for internal use. This may also be viewed as a closed PKI as opposed to an open PKI. An archive 254 connected with the database 250 provides long-term storage of notary records. A tick engine 256 is provided for the generation of transaction based invoicing information. Also, several firewalls 258 are provided for increased security.

It should be noted that numerous modifications and variations can be made without departing from the scope of the present invention defined in the accompanied claims.

Thus, it is to be understood that even though some specific system components have been pointed out, they are only elucidative examples for the ease of understanding. Obviously, many others are conceivable.

Also, even if the previous description for the most part has emphasised computer based communication, other means are equally possible, such as a cellular phone WAP-interface, etc..

## Claims

1. A method of enabling secure transfer of a package of information in a digital communications network from a sender to a receiver, comprising the steps of:
encrypting said package of information;
providing said encrypted package of information to the receiver; and
providing to a third party an encryption key having such a format that it is unable to decrypt said package of information, said encryption key, upon positive identification of the receiver, being providable from said third party to the receiver, and enabling, with the involvement of a supplementary encryption key of the receiver, decryption of the package of information.

2. A method as claimed in claim 1, further comprising the step of providing a first encryption key, which is said supplementary encryption key, to the receiver, the encryption key provided to the third party being a second encryption key, wherein the second encryption key in combination with the first encryption key enables decryption of the package of information.

3. A method as claimed in claim 2, in which said step of encrypting said package of information further comprises the steps of:
combining said first and second encryption keys for generating a combined encryption key; and
encrypting said package of information by means of said generated combined encryption key.

4. A method as claimed in claim 2, in which said package of information is first encrypted by one of said first and second encryption keys, and then encrypted by the other one of said first and second encryption keys.

5. A method as claimed in claim 2, in which said information is encrypted by a main encryption key, said main encryption key then being divided into said first encryption key which is provided to the receiver and said second encryption key which is provided to the third party.

6. A method as claimed in any one of claims 2 - 5, in which the step of providing a first encryption key to the receiver is preceded by the step of encrypting said first encryption key with a public key of the receiver, wherein the receiver is able to decrypt said encrypted first encryption key with a private key.

7. A method as claimed in claim 1, in which the step of providing to a third party an encryption key is preceded by the steps of:
encrypting said package of information with that encryption key; and
encrypting that encryption key, wherein said encrypted encryption key is decryptable by said supplementary encryption key of the receiver so as to enable decryption of the package of information.

8. A method as claimed in claim 7, in which said encryption key is encrypted with a public key of the receiver, and in which said supplementary encryption key is a private key of the receiver enabling decryption of said encrypted encryption key.

9. A method as claimed in any one of claims 1 - 8, in which instructions are sent to the third party, said instructions defining under what conditions the encryption key provided to the third party may be retrieved by the receiver of the package of information.

10. A method as claimed in any one of claims 1 - 9, in which the encryption key provided to the third party, upon instructions to the third party, is prevented from being provided to the receiver.

11. A method as claimed in any one of claims 1 - 10, in which said receiver is identified by means of a registered certificate.

12. A method as claimed in any one of claims 1 - 11, in which the secure transfer of said package of information is only completely performed if the sender has been identified by the third party, such as by means of a registered certificate.

13. A method as claimed in any one of claims 1 - 12, in which a hash value derived from the contents of said package of information is stored by the third party, without storing the actual package of information, wherein the receiver will be able to detect if said package of information has been tampered with.

14. A method of enabling secure transfer of a package of information in a digital communications network from a sender to a receiver, comprising the steps of:
receiving from the sender of an encrypted package of information an encryption key which, with the involvement of a supplementary encryption key of the receiver, enables decryption of said package of information;
identifying the receiver of said package of information; and
providing said received encryption key to the receiver upon positive identification of the same.

15. A method as claimed in claim 14, in which said supplementary encryption key is a first encryption key provided to the receiver, and in which the encryption key received in the step of receiving an encryption key is a second encryption key, the combination of said first and second encryption keys enabling decryption of said package of information.

16. A method as claimed in claim 14, in which the encryption key received in the step of receiving an encryption key is an encrypted encryption key.

17. A method as claimed in claim 16, in which said encryption key is encrypted with a public key of the receiver, and in which said supplementary encryption key is a private key of the receiver enabling decryption of said encrypted encryption key.

18. A method as claimed in any one of claims 14 - 17, in which instructions are received from the sender, said instructions defining under what conditions the encryption key received from the sender may be retrieved by the receiver of the package of information.

19. A method as claimed in any one claims 14 - 18, in which the receiver is identified by means of a registered certificate.

20. A method as claimed in any one of claims 14 - 19, further comprising the step of identifying the sender, wherein the secure transfer of said package of information is only completely performed if the sender has been identified, such as by means of a registered certificate.

21. A method as claimed in any one of claims 14 - 20, further comprising the step of storing a hash value derived from the contents of said package of information, without storing the actual package of information, wherein the receiver will be able to detect if said package of information has been tampered with.

22. A method of enabling secure transfer of a package of information in a digital communications network from a sender to a receiver, comprising the steps of:
obtaining said package of information, which is encrypted, from the sender;
being positively identified by a third party;
obtaining from said third party an encryption key having such a format that it is unable to decrypt said package of information, said third party having obtained the encryption key from the sender; and
decrypting said package of information by means of said obtained encryption key with the involvement of a supplementary encryption key.

23. A method as claimed in claim 22, further comprising the step of obtaining a first encryption key, which is said supplementary encryption key, from the sender, the encryption key obtained from the third party being a second encryption key, wherein the step of decrypting said package of information comprises the step of combining the first encryption key and the second encryption key.

24. A method as claimed in claim 23, in which said step of decrypting said package of information further comprises the steps of:
combining said first and second encryption keys for generating a combined encryption key; and
decrypting said package of information by means of said generated combined encryption key.

25. A method as claimed in claim 23, in which said package of information is first decrypted by one of said first and second encryption keys, and then decrypted by the other one of said first and second encryption keys.

26. A method as claimed in claim 23, in which said first encryption key is encrypted with a public key of the receiver, wherein said step of decrypting said package of information is preceded by the step of decrypting said encrypted first encryption key with a private key.

27. A method as claimed in claim 22, in which the encryption key obtained from the third party is encrypted, wherein the step of decrypting said package of information comprises the steps of:
decrypting the encrypted encryption key obtained from the third party by means of said supplementary encryption key; and
decrypting said package of information with the decrypted encryption key.

28. A method as claimed in claim 27, in which the encryption key obtained from the third party is encrypted with a public key of the receiver, wherein said supplementary encryption key is a private key of the receiver enabling decryption of the encrypted encryption key.

29. A method as claimed in any one of claims 22 - 28, in which the step of being positively identified by a third party comprises identification by means of a registered certificate.

30. A method as claimed in any one of claims 22 - 29, further comprising the steps of:
obtaining from the third party a first hash value which has been derived from the contents of said package of information by means of a hash function;
calculating by means of said hash function a second hash value of the obtained package of information; and
comparing said first hash value with said second hash value, in order to detect if said package of information has been tampered with.

31. A system for enabling secure transfer of a package of information in a digital communications network from a sender to a receiver, comprising means for performing the steps in any one of the methods as claimed in claims 1 - 30.

32. A computer readable medium for enabling secure transfer of a package of information in a digital communications network from a sender to a receiver, comprising means for performing the steps in any one of the methods as claimed in claims 1 - 30.
